(19) **Europäisches Patentamt**

**European Patent Office**

**Office européen des brevets**

(11) **EP 0 619 552 B1**

## (12) FASCICULE DE BREVET EUROPEEN

(45) Date de publication et mention
de la délivrance du brevet:
**01.03.2000 Bulletin 2000/09**

(51) Int. Cl.⁷: **G06T 7/20**, H04N 5/14

(21) Numéro de dépôt: **94200902.8**

(22) Date de dépôt: **31.03.1994**

(54) **Procédé et dispositif d'estimation de mouvement d'objets dans des images successives animées subdivisées en blocs bidimensionnels d'éléments d'image**

Verfahren und Vorrichtung zur Bestimmung von Objektbewegungen in hintereinanderfolgenden, animierten, in zweidimensionale Bildelementblöcke geteilten Bildern

Object motion estimation device and process in animated successive pictures subdivided in bidimensional image element blocs

(84) Etats contractants désignés:
**DE FR GB**

(30) Priorité: **07.04.1993 FR 9304138**

(43) Date de publication de la demande:
**12.10.1994 Bulletin 1994/41**

(73) Titulaires:
• **LABORATOIRES D'ELECTRONIQUE PHILIPS S.A.S.**
**94450 Limeil-Brévannes (FR)**
Etats contractants désignés:
**FR**

• **Koninklijke Philips Electronics N.V.**
**5621 BA Eindhoven (NL)**
Etats contractants désignés:
**DE GB**

(72) Inventeur: **Bazzaz, Paul**
**F-75008 Paris (FR)**

(74) Mandataire:
**Lottin, Claudine et al**
**Société Civile S.P.I.D.**
**156, Boulevard Haussmann**
**75008 Paris (FR)**

(56) Documents cités:
**EP-A- 0 290 085**    **FR-A- 2 628 864**

**Description**

L'invention concerne un procédé d'estimation de mouvement d'objets dans une séquence d'images animées comprenant des étapes de traitement d'une image courante dans la séquence, incluant :

une opération de subdivision de ladite image en blocs bidimensionnels arrangés en rangées et en colonnes et une estimation pour chaque bloc d'un jeu de données d'erreurs, et basés sur ledit jeu, une estimation d'un vecteur de mouvement unique attribué au bloc courant ;

une opération de minimisation du nombre de vecteurs de mouvement dans l'image courante en créant et en faisant croître des régions formées par fusion de blocs adjacents ayant des vecteurs de mouvement cohérents, et en attribuant à chaque région créée ou formée par fusion un unique vecteur de mouvement qui est cohérent avec les vecteurs de mouvement des blocs fusionnés.

L'invention concerne également un dispositif pour mettre en oeuvre ce procédé.

Par vecteur de mouvement il faut entendre un vecteur caractérisant le décalage du bloc courant vis-à-vis d'un bloc de l'image précédente dans la séquence, ayant les propriétés de luminosité les plus proches du bloc courant.

L'invention trouve son application dans le domaine de la télévision, dans les systèmes de codage d'images, et pour des normes de télévision variées. Par exemple, pour la télévision conventionnelle, ou haute définition ou pour le système américain ou européen etc.

Il est déjà connu du brevet FR-A-2 628 864 un procédé qui repose sur le calcul d'un veccteur de mouvement relatif à un point courant par un processus algorithmique convergent de prédiction/correction, ledit processus consistant à prendre comme hypothèse de départ de calcul une valeur prédite de mouvement.

Puis ce procédé divulgué dans le document affecte à chaque bloc élémentaire d'image plusieurs vecteurs de mouvement prédits, qui sont relatifs à des points du bloc et qui sont des candidats acceptables pour représenter ce bloc.

Ensuite le procédé divulgué fusionne les blocs élémentaires selon des règles géométriques de fusion, qui comprennent l'exploration de la périphérie de chaque bloc pour chercher des blocs élémentaires comportant des vecteurs de mouvement communs parmi lesdits candidats.

Et ce procédé réalise la fusion du bloc central avec les blocs périphériques si le pourcentage de blocs périphériques ayant des candidats communs dépasse un seuil donné.

Un dispositif d'estimation de mouvement est déjà connu par le brevet GB 2 214 751. Ce brevet décrit une méthode dite "Block Matching Process" ou méthode d'estimation de mouvement par correspondance de blocs. Ce procédé, noté B.M.A. (de l'anglais Block Matching Algorithm) dans la suite de la présente description, met en oeuvre une recherche d'un bloc dit correspondant effectuée dans l'image qui précède l'image courante, et dans un voisinage de dimensions déterminées délimité par une fenêtre appelée "horizon de recherche" (en anglais Search Window), ces dimensions étant liées à l'amplitude maximale du vecteur de mouvement recherché. Le bloc dit correspondant est le bloc qui, selon des critères prédéterminés, a les propriétés de luminosité les plus proches de celles du bloc courant.

L'inconvénient du procédé BMA connu est qu'il fournit des vecteurs de mouvement non cohérents. Par non-cohérence, il faut entendre le fait que dans l'image décomposée en blocs, la probabilité pour que des blocs voisins aient, ou bien le même vecteur de mouvement, ou bien un vecteur de valeur proche, est très faible. Il en résulte que lors de la reconstitution de l'image à partir de ces vecteurs mouvement non cohérents apparaissent les effets de subdivision en blocs qui consistent en des discontinuités aux frontières de blocs n'ayant pas de vecteurs de mouvement identiques.

Un but de la présente invention est donc de minimiser les effets de la subdivision en blocs.

D'autre part, si l'image courante est subdivisée en X x Y blocs selon les directions horizontale et verticale, le procédé BMA peut fournir, dans le pire des cas, X x Y vecteurs de mouvement différents.

Or, pour l'application au domaine de la compression d'image pour la télévision haute définition ou numérique, etc, il est indispensable de réduire, du côté de la source, le volume de données à transmettre, ou à stocker.

Un but de la présente invention est alors de minimiser le nombre des vecteurs de mouvements trouvés dans chaque image, tout en optimisant chacun de ces vecteurs, afin de réduire encore le nombre d'informations à transmettre, et de conduire à une reconstitution de l'image de meilleure qualité.

Ainsi, un but de la présente invention est de fournir un dispositif mettant en oeuvre un procédé capable de rendre spatialement cohérents des groupes de vecteurs de mouvement préalablement calculés par un dispositif du type BMA connu.

Un autre but de l'invention est de fournir un tel dispositif utilisant un minimum de matériel, c'est-à-dire principalement un nombre de mémoires aussi faible que possible, et des mémoires de taille ou capacité aussi petite que possible.

Le dispositif selon l'invention présente alors de nombreux avantages parmi lesquels :

- le nombre des données à transmettre est réduit, ce qui est particulièrement intéressant dans le domaine du codage en télévision.
- les effets de la subdivision en blocs sont minimisés dans l'image reconstruite, qui est donc améliorée.

Les buts de l'invention sont atteints, et les avantages obtenus, par un procédé tel que décrit dans le préambule et muni des caractéristiques de la revendication 1.

Un dispositif pour mettre en oeuvre ce procédé est muni des caractéristiques techniques récitées dans la revendication 5.

L'invention est décrite ci-après en détail en référence avec les figures schématiques annexées parmi lesquelles :

- la FIG.1 représente l'architecture du dispositif dit de cohérence composée de modules fonctionnels ;
- la FIG.2 illustre la détermination d'un vecteur de mouvement relatif à un bloc d'image au moyen du module dit BMA de l'architecture de la FIG.1 ;
- la FIG.3 montre les blocs d'image voisins d'un bloc courant ;
- les FIG.4A à 4C montrent les régions potentielles pour une fusion gauche avec un bloc courant, et les FIG.4D à 4F pour une fusion supérieure ;
- la FIG.5 montre le chronogramme de fonctionnement des modules de mémoire de l'architecture de la FIG.1 ;

L'invention est décrite ci-après dans un exemple concret mais non limitatif, d'application à la télévision à haute définition.

Par signal de télévision à haute définition, il faut entendre, à ce jour, un signal pour affichage sur écran de 1250 lignes, avec 1728 points ou pixels par ligne selon un système dit entrelacé.

Par système entrelacé, il faut entendre que chaque image (en anglais FRAME) de 1250 lignes est composée de deux trames (en anglais FIELD) comprenant chacune la moitié des 1250 lignes. Parmi ces deux trames, l'une est dite PAIRE, et comprend toutes les lignes de rang pair de l'image, et l'autre est dite IMPAIRE et comprend toutes les lignes de rang impair de l'image. Ces deux trames ou sous-ensemble de lignes sont superposables.

L'image de télévision est affichée sur un écran au moyen d'un balayage temporel qui, à un instant initial débute en haut et à gauche de l'écran, qui se poursuit en affichant la première ligne de la première trame vers la droite, puis chaque ligne successive de haut en bas jusqu'à l'affichage de la totalité de la première trame. Un balayage temporel identique affiche ensuite toutes les lignes de la seconde trame.

Un tel signal vidéo à haute définition contient 4 fois le nombre d'informations comparées à un signal vidéo à définition normale. Il apparaît alors un problème dans la transmission de ces images à haute définition dans des canaux de télévision à définition normale.

On est donc amené à réduire le nombre d'informations à transmettre en détectant l'existence de mouvement d'une image à l'autre. Par exemple, on peut sous-échantillonner le signal par un facteur 2, en éliminant les trames PAIRES. Alors, le but de l'estimateur de mouvement est de calculer les vecteurs de mouvement de chaque trame PAIRE, ces dernières n'étant pas transmises, en fonction de la trame IMPAIRE précédente, ou suivante, ou en fonction des deux. Ces vecteurs de mouvements seront transmis à un système décodeur qui sera alors capable de reconstruire la trame manquante en utilisant les vecteurs de mouvement et les trames IMPAIRES au moyen d'interpolation de compensation de mouvement.

Le but de la présente invention est de fournir un procédé d'estimation de mouvement qui fournit pour chaque trame un nombre de vecteurs de mouvement aussi réduit que possible, et un dispositif pour mettre en oeuvre ce procédé avec une économie de moyens techniques, notamment une économie de nombre de mémoires et de capacités de mémoire.

Dans ce qui suit, on parlera de traitement "d'images", et non pas du traitement de "trames" dans un but de simplicité d'expression et de généralisation des concepts.

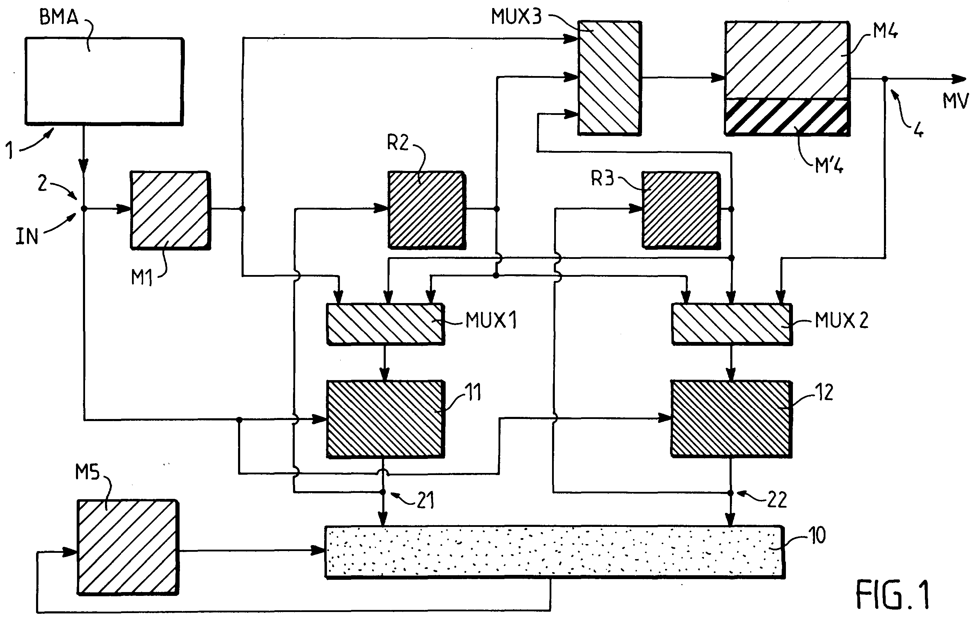

En référence avec la FIG.1, le dispositif pour mettre en oeuvre le procédé selon l'invention est représenté sous la forme d'une architecture composée de modules fonctionnels qui comprend d'abord un premier module 1 capable de fournir des vecteurs de mouvement associés à un certain nombre de blocs bidimensionnels, qui sont des subdivisions de l'image $T_i$ à traiter. Ce module 1 est conforme au système connu de l'état de la technique mettant en oeuvre la méthode dite BMA. Ce module 1 sera ci-après appelé systématiquement "**module** BMA" pour des raisons de simplicité.

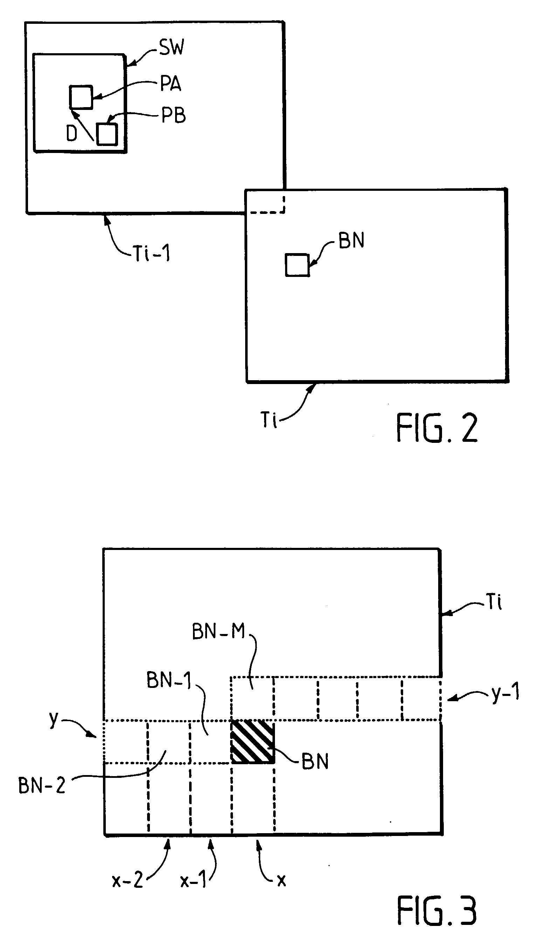

En référence avec la FIG.3, dans le module BMA, l'image $T_i$ à traiter est subdivisée en X x Y blocs suivant des lignes et des colonnes respectivement, et un vecteur de mouvement est recherché pour chacun de ces blocs. Les blocs sont traités selon le balayage conventionnel en télévision à ce jour, c'est-à-dire du haut à gauche, vers le bas à droite.

Ainsi, le bloc courant BN est situé dans la yième rangée en partant du haut de l'image $T_i$, et dans la xième colonne en partant de la gauche. Du fait de ce balayage conventionnel, tous les blocs situés dans la rangée supérieure y-1, et tous les blocs situés dans les colonnes de gauche de la même rangée y, ont déjà été traités au moment où le traitement du bloc courant BN est entrepris. Le bloc BN est par ailleurs le Nième bloc traité depuis le commencement du traitement de l'image $T_i$, qui a eu lieu en haut et à gauche de cette image $T_i$. Le bloc BN porte donc le numéro N dans la chaîne de traitement de l'image $T_i$.

En référence avec la FIG.2, le module BMA permet, pour chaque bloc courant BN de l'image $T_i$ balayée de manière conventionnelle, de rechercher dans l'image précédente $T_{i-1}$, et sur un voisinage de taille déterminé, ou horizon de recherche, délimité par unedite fenêtre de recherche SW (en anglais Search Window), le bloc qui, selon un critère prédéterminé, a les propriétés de luminosité les plus proches du bloc courant.

A cet effet, comme montré FIG.2, une projection orthogonale PB du bloc courant BN de l'image Ti est réalisée dans la trame précédente Ti-1. Puis la position antérieure PA du bloc courant BN est recherchée dans cette image précédente Ti-1. Le déplacement ou mouvement entre la projection orthogonale PB et la position antérieure PA est matérialisé par ledit vecteur de mouvement $\vec{D}$.

Pour effectuer cette recherche du bloc dit correspondant, situé à la position antérieure PA, le module BMA est amené à constituer un ensemble de données, appelé "jeu de données d'erreur". Ce jeu est constitué de trois types de données d'erreur suivants :

A/ unedite "**carte d'erreur**" qui rassemble des grandeurs appelées erreurs E(D) relatives aux différences entre la luminosité des points ou pixels du bloc courant et la luminosité des pixels des blocs situés dans l'horizon de recherche déplacés vis-à-vis de ce bloc courant, ou de sa projection PB, d'une valeur D ayant pour composantes dx et dy.

Plusieurs critères de définition d'erreur E(D) sont possibles. Un premier critère repose sur la moyenne des valeurs absolues de la différence de luminosité entre les points du bloc courant et ceux du bloc de l'horizon de recherche dans l'image précédente déplacé d'un vecteur D.

L'intensité I d'un point de coordonnées x,y dans le bloc courant BN s'écrit :
I(x,y).

L'intensité I d'un point correspondant situé, dans le bloc de l'horizon de recherche déplacé d'un vecteur D par rapport au bloc PB projection orthogonale du bloc courant BN, dans la trame précédente Ti-1, s'écrit : I(x-dx, y-dy).

L'erreur fondée sur la moyenne des valeurs absolues s'écrit :

$$E(D) = \sum_x \sum_y |(x,y)-I(x-dx, y-dy)|$$

Un autre critère de calcul de l'erreur E(D) peut être celui dit des moindres carrés qui s'écrit :

$$E(D) = \sum_x \sum_y [I(x,y)-I(x-dx, y-dy)]^2$$

Ladite "carte d'erreur" rassemble donc les erreurs E(D) définies selon un des critères choisis, correspondant à tous les déplacements D possibles dans l'horizon de recherche choisi.

B/ - unedite **erreur** BMA, qui est l'erreur minimale parmi toutes les erreurs de la carte d'erreur,

C/ - undit **vecteur minimum** qui est le vecteur de mouvement correspondant à ladite erreur minimale ou BMA.

Le **module** BMA choisit le vecteur estimé pour le bloc courant comme le vecteur de mouvement qui correspond à ladite erreur minimale ou BMA, c'est-à-dire ledit vecteur minimum.

Le dispositif selon l'invention est destiné à appliquer un processus de cohérence à chaque bloc traité par le module BMA, c'est-à-dire que le dispositif selon l'invention a pour fonction de rendre cohérents les vecteurs de mouvements calculés par le module BMA.

En référence avec la FIG.1, conformément à l'invention, ce dispositif comprend dans son architecture undit **système dit de cohérence**, qui va permettre, à partir des blocs individuels, la création de dites "régions" dans l'image Ti courante, et la croissance progressive de ces régions, en opérant le rattachement du bloc courant BN à une région adjacente comprenant des blocs déjà balayés, assurant ainsi la croissance de régions homogènes ayant le même vecteur de mouvement estimé.

A cet effet, le système de cohérence selon l'invention comprend des moyens pour fusionner plusieurs blocs voisins. Cette fusion peut aller jusqu'à la réunion de tous les blocs d'une image entière en cas d'image fixe, ce qui correspond à des vecteurs de mouvement nuls. Les blocs ainsi fusionnés forment l'entité que l'on appelle "région" et qui a donc un seul vecteur de mouvement.

Le système de cohérence selon l'invention comprend, parmi les moyens pour fusionner les blocs, des moyens pour comparer le bloc BN à estimer dans l'image courante Ti avec son voisinage déjà traité. Si l'on considère que le balayage utilisé est le balayage conventionnel à ce jour en matière de télévision -du haut à gauche, vers le bas à droite-, le voisinage déjà traité est alors constitué par le bloc contigü gauche BN-1 dans la même ligne y de blocs, et par le bloc continu supérieur BN-M dans la même colonne x de blocs.

La comparaison entre le bloc courant BN et les blocs contigus gauche et supérieur se fait sur les informations fournies par le module BMA référencé 1 sur la FIG.1, c'est-à-dire le jeu de données d'erreur :

A/ la carte d'erreurs,
B/ l'erreur minimale ou BMA,
C/ le vecteur minimum

qui constitue l'ensemble dit des "éléments de décisions".

La croissance de régions par fusion de blocs courants doit être initialisée. A chaque région seront alors affectés une carte d'erreur, une erreur minimale et un vecteur minimum spécifiques à cette région.

Le premier bloc balayé est donc affecté à une première région, qui est numérotée en commençant par 1 et dont les données initiales sont donc celles de ce premier bloc :

> a/ la **carte d'erreurs** E(D) est, initialement, celle du premier bloc courant, telle que fournie par le circuit d'estimation de mouvement 1 ou système BMA ;
> b/ l'**erreur minimale** $E_{min}$ = min(E(D)) est, dans ce cas, l'erreur minimale (erreur BMA) dans la carte d'erreurs du premier bloc courant ;
> c/ le **vecteur de mouvement** optimal D est, ici, celui auquel correspond ladite erreur minimale ;
> d/ pour chaque bloc traité, on conserve le numéro de la région à laquelle il a été affecté, ici le numéro 1 pour le premier bloc ainsi considéré.

Pour une région créée à partir de blocs voisins fusionnés au moyen du système de cohérence,

> a'/ la **carte d'erreurs** de la région est la somme arithmétique des cartes d'erreurs de chaque bloc contenu dans cette région,
> b'/ l'**erreur minimale** (dite BMA) de la région est la somme arithmétique des erreurs minimales intrinsèques de chaque bloc.
> c'/ le **vecteur minimum** de la région est celui qui minimise l'erreur de la nouvelle carte d'erreur relative à cette région.

Donc, lors du traitement d'un bloc donné, le système de cohérence a des moyens pour comparer les informations intrinsèques du bloc courant BN, avec d'une part, les informations de ce bloc fusionné avec la région contiguë gauche, et d'autre part avec les informations de ce bloc fusionné avec la région contiguë supérieure.

En fonction de critères décrits plus loin, trois situations, résultant de ces comparaisons, peuvent être envisagées :

> 1) la première situation possible est celle où aucune fusion n'est envisagée. Dans ce cas une nouvelle région est initialisée ayant comme informations correspondantes, les informations intrinsèques du bloc courant ;
> 2) la seconde situation possible est celle où la fusion est envisagée avec la région gauche. Dans ce cas, une mise à jour est effectuée pour fournir les informations relatives à cette nouvelle région, en additionnant les cartes d'erreurs, en additionnant les erreurs minimales, et en remplaçant les vecteurs minima par un nouveau vecteur minimum qui minimise la nouvelle carte d'erreur ;
> 3) la troisième situation possible est celle où la fusion est envisagée avec la région supérieure. Dans ce cas, une mise à jour est effectuée comme dans le cas de la fusion avec la région gauche, mais en prenant en compte les informations relatives à la région supérieure.

Dans la réalisation du système de cohérence mettant en oeuvre ces opérations, ou algorithmes, il apparaît un certain nombre de problèmes.

> α) le **premier problème** de réalisation est lié à la complexité des accès mémoire nécessaire. En effet les mémoires doivent être adressées deux fois durant une période temporelle de base. Durant la période bloc on doit accéder à la mémoire 2n fois, n étant le nombre de périodes d'horloge. On serait donc tenté de multiplier les mémoires par 2 pour résoudre ce problème d'accès mémoire.
> β) le **second problème** de réalisation est lié à la capacité des mémoires requises pour stocker les informations.
> La partie du système la plus consommatrice de capacité mémoire sera celle qui est réservée aux stockages des informations des cartes d'erreurs. Par exemple, à titre indicatif, on pourrait avoir 256 erreurs, sur 16 ou 24 bits, à stocker. Et non seulement le système doit être à même de stocker les cartes d'erreurs des blocs courants à estimer, mais en outre, le système doit pouvoir stocker les cartes d'erreurs de la région gauche, celle de la région supérieure, ainsi que celles de toutes les régions potentielles de la trame. Dans le pire des cas, qui ne peut être exclu, le système doit pouvoir stocker les informations relatives à X x Y régions différentes correspondant au cas où aucune fusion n'a été effectuée.
> γ) le **troisième problème** de réalisation est lié à l'obtention de la collision entre des informations venant d'origines différentes, et devant aboutir au même point du système. Ce dernier problème est donc essentiellement celui de la gestion du flux des données.

Le système de cohérence selon l'invention fournit des moyens pour résoudre ces trois problèmes techniques principaux. Selon l'invention, la méthode, ou algorithme, décrite plus haut est mise en oeuvre sans parallélisation, en sorte que les blocs courants sont traités par le même système matériel, successivement. Cette technique de traitement des données sera appelée ultérieurement "pipe-line" et résout notamment le problème exposé sous α). Cette mise en oeuvre permet à la fois de minimiser le nombre des mémoires par 2, et de diminuer la capacité des mémoires d'un facteur important, par exemple 72, si on part d'une image subdivisée en 72 lignes de blocs, ce qui résout le problème exposé sous β). Enfin le troisième problème exposé sous γ) relatif à la gestion des données est résolu par un système de multiplexeurs qui aiguillent les informations d'un point à un autre du système de cohérence, en fonction de l'environnement du bloc à traiter et de la décision de fusion à effectuer.

Selon l'invention, des critères de décision suivants sont utilisés pour décider ou non de la fusion d'un bloc courant avec l'une des régions gauche ou supérieure, ou pour décider la non-fusion.

I) Un **premier critère** de fusion peut consister à comparer l'erreur minimale de la nouvelle région formée en cas de fusion, avec la somme de l'erreur minimale de la région avant fusion, et de l'erreur minimale du bloc courant. Dans ce critère, on peut introduire en outre un seuil multiplicatif.

I') D'autres **critères** de fusion de même type que le premier peuvent être envisagés pour améliorer, c'est-à-dire affiner le processus de cohérence.

Si le critère I ou éventuellement I' est vérifié pour les deux fusions possibles, c'est-à-dire gauche et supérieure, un critère supplémentaire dit d'arbitrage est appliqué.

II) Le **critère d'arbitrage** consiste à comparer les erreurs, recherchées dans la carte d'erreurs du bloc courant correspondant aux vecteurs minima des régions gauche et supérieure après fusion.

Ces critères sont mis en oeuvre au moyen des catégories d'éléments de décision suivantes :

(1) pour le bloc courant BN, comme défini plus haut sous A, B, C :

- sa carte d'erreurs,
- son erreur BMA ou minimale
- son vecteur minimum.

(2) pour chaque ancienne région AG ou AS (gauche ou supérieure), comme définis plus haut sous a', b', c' (ou a,b,c):

- sa carte d'erreurs respective,
- son erreur minimale ou BMA,
- son vecteur de mouvement optimal dit minimum.

(3) de même, pour chaque nouvelle région AN constituée en associant soit l'ancienne région AG gauche, soit l'ancienne région AS supérieure au bloc courant BN, comme définis sous a', b', c' (ou sous a,b,c):

- sa carte d'erreurs respective,
- son erreur minimale Emin(AN),
- son vecteur minimum.

Ces éléments de décision nécessaires, ou jeux de données d'erreur, sont stockés dans les diverses mémoires prévues dans le dispositif.

Les critères I, I', ou II sont écrits sous forme d'une relation d'inégalité déterminée pour qu'ils permettent de contrôler ou de limiter la dégradation de la qualité de la restitution ultérieure du mouvement.

A cet effet, pour prendre une décision de fusion, on peut par exemple imposer à l'erreur minimale (BMA) de la nouvelle région de rester inférieure ou égale à la somme, augmentée d'un seuil en général réglable, de l'erreur minimale (BMA) du bloc courant BN et de l'erreur minimale (BMA) de l'ancienne région.

Cet exemple n'est bien entendu pas limitatif, et l'on peut, par le choix d'autres types d'inégalités, fixer d'autres critères de contrôle des caractéristiques de la nouvelle région par rapport à celles de l'ancienne région considérée et à celles du bloc courant.

En référence avec la FIG.1, l'**architecture du système de cohérence** comprend deux parties principales :

- des mémoires M1, R2, R3, M4, M5 et M'4 ;
- des modules de calcul 11, 12 et 10.

Cette architecture comprend en outre des moyens pour acheminer correctement les données. Ces moyens sont constitués par des multiplexeurs MUX1, MUX2, MUX3.

La **première mémoire** M1 stocke le jeu de données d'erreur relatif au bloc courant BN : c'est-à-dire la carte d'erreurs du bloc courant, ainsi que l'erreur minimale (ou BMA) de cette carte et le vecteur de mouvement associé.

La **deuxième mémoire** R2 et la **troisième mémoire** R3 stockent le jeu de données d'erreur relatif respectivement, à la région gauche incluant le bloc courant après calcul de fusion gauche, et le jeu de données d'erreur relatif à la région supérieure incluant le bloc courant après calcul de fusion supérieure, ces jeux de données d'erreur étant pour chaque région sa carte d'erreur ainsi que l'erreur minimale (ou BMA) correspondante, et le vecteur de mouvement associé à ladite erreur minimale. Les informations dites de région ainsi stockées provisoirement en mémoires R2 et R3 sont également stockées, cette fois pour toutes les régions de l'image, et progressivement au fur et à mesure du balayage, dans la quatrième mémoire M4, qui contient donc les données relatives à toutes les régions de l'image courante. Les numéros de repérage desdites régions, et la correspondance entre le numéro d'un bloc et le numéro de la région incluant ce bloc sont stockés dans la cinquième mémoire M5. Ces stockages en mémoire M4 et en mémoire M5 interviennent après les opérations de fusion ou d'initialisation.

Les **modules de calcul** comprennent en référence avec la FIG.1, un module de calcul de fusion gauche 11, un module de calcul de fusion supérieure 12, et un contrôleur de procédure 10.

Les trois **multiplexeurs** MUX1, MUX2 et MUX3 contrôlent l'acheminement correct des données entre les mémoires M1, R2, R3, M4 et les modules de calcul 11 et 12.

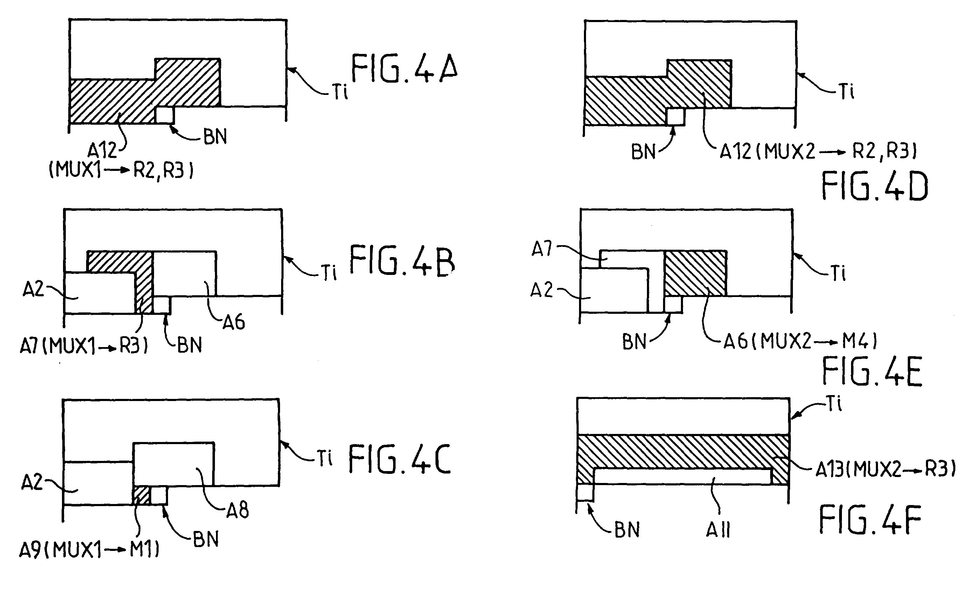

En référence avec les FIG.4, on a représenté les régions adjacentes au bloc courant BN pouvant constituer des régions potentielles de fusion.

Les **régions potentielles gauches** adjacentes pour le bloc courant peuvent être soit :

- en référence avec la FIG.4C, le bloc précédent A9 dans le cas où ledit bloc précédent a initialisé une nouvelle région) : le jeu de données d'erreurs correspondant est alors disponible dans la mémoire M1 ;
- en référence avec la FIG.4B, la précédente région gauche A7 (dans le cas où le bloc précédent gauche a été fusionné avec une région supérieure ; ce cas est appelé fusion supérieure du bloc précédent, le jeu de données d'erreur correspondant peut être trouvé dans R3.
- en référence avec la FIG.4A, la précédente région gauche supérieure A12 (dans le cas de fusion gauche supérieure du bloc précédent) : le jeu de données d'erreur correspondant peut être trouvé dans la mémoire R3 ou la mémoire R2.

La sélection entre les trois mémoires M1, R2, R3 est réalisée au moyen du multiplexeur MUX1, en fonction de la décision précédente et de la position du bloc courant.

Les **régions potentielles** adjacentes **supérieures** pour le bloc courant peuvent être soit :

- en référence avec la FIG.4D, la région précédente gauche ou supérieure A12 (dans le cas de fusion gauche ou supérieure du bloc précédent) : le jeu de données d'erreur correspondant est disponible dans la mémoire R2 ou la mémoire R3.
- en référence avec la FIG.4F, la région précédente supérieure A13 (dans le cas de fusion supérieure du bloc précédent) : le jeu de données d'erreur correspondant est disponible dans la mémoire R3.
- en référence avec la FIG.4E, une région A6 non impliquée dans un précédent processus de fusion : le jeu de données correspondant est disponible dans la mémoire M4.

La sélection entre ces trois mémoires R2, R3, M4 est faite au moyen du multiplexeur MUX2, en fonction de la décision précédente, le numéro des régions impliquées dans le processus, et la position du bloc courant. L'adresse de la mémoire M4 dépend du numéro de la région à lire.

La région créée, dont le jeu de données d'erreur doit être stocké dans la mémoire M4 après la décision de fusion concernant le bloc courant, peut être soit :

- le bloc déjà traité (dans le cas où il a initialisé une nouvelle région) : le jeu de données d'erreur sera stocké dans la mémoire M1,
- la région gauche (dans le cas de fusion gauche du bloc courant) : le jeu de données d'erreur correspondant sera stocké dans la mémoire R2,

- la région supérieure (dans le cas de fusion supérieure du bloc courant) : le jeu de données d'erreur correspondant sera stocké dans la mémoire R3.

La sélection entre ces trois mémoires est faite au moyen du multiplexeur MUX3, en fonction de la décision.

Toutefois, cela ne peut être fait qu'après que les calculs et les comparaisons pour le bloc courant soient terminés : c'est-à-dire, à la fin de la séquence de bloc.

Pour cette raison, le stockage du jeu de données d'erreur d'une région contenant le bloc courant est réalisé dans le temps où le bloc suivant est traité.

D'autre part, l'adresse de la mémoire M4 dépend du nombre de régions à stocker.

La **procédure de cohérence** du bloc courant appliquée par l'architecture de la FIG.1 peut être défini par les étapes suivantes :

ETAPE 1 : les numéros des régions adjacentes gauches et supérieures sont lues dans M5 ;

ETAPE 2 : le jeu de données d'erreur relatif au bloc courant est stocké dans M1 et en même temps est envoyé aux modules de calcul 11 et 12 ;

ETAPE 3 : le jeu de données d'erreur relatif aux régions adjacentes gauches et supérieures est lu dans les mémoires appropriées M1, R2, R3 ou M4 et en même temps envoyé aux modules de calcul 11, 12 ;

ETAPE 4 : les calculs sont effectués par les modules 11 et 12 ;

ETAPE 5 : les résultats sont stockés dans la mémoire correspondante (R2 pour le calcul de fusion de région gauche, et R3 pour le calcul de fusion de région supérieure) ; et les étapes 2 à 5 sont répétées jusqu'à la fin de la séquence du bloc courant ;

ETAPE 6 : une décision est prise à partir des calculs ;

ETAPE 7 : un numéro de région est stocké pour le bloc courant dans M5 ;

ETAPE 8 : les données d'erreurs relatives au bloc après fusion (ou de la région initialisée) sont lues à partir des mémoires M1, R2, R3 et stockées dans M4.

Il faut noter que les étapes 3 et 8 sont contrôlées par les multiplexeurs MUX en fonction de la position du bloc, des régions adjacentes et de la décision de fusion.

De plus, le numéro de région du bloc traité (courant) peut être le même que le numéro de la région adjacente dans le cas de fusion, ou peut être un nouveau numéro (donné par un compteur de régions) dans le cas d'une initialisation.

Disposant maintenant de ces différents éléments, on décide en effet d'opérer la fusion avec la région gauche ou la fusion avec la région supérieure, ou l'initialisation, en fonction d'un des critères I, I' ou II, écrit sous forme d'une relation d'inégalité déterminée comme déjà décrit.

Le rattachement final du bloc courant à une région (soit à la région adjacente gauche, soit à la région adjacente supérieure, soit à une nouvelle région initialisée avec ce bloc lui-même) est donc réalisé en suivant les étapes de comparaison définies ci-dessus, qui conduisent à quatre situations distinctes :

(1) la fusion du bloc courant avec l'ancienne région gauche est acceptée (application sur la région gauche du critère I ou I' d'inégalité) et celle de ce bloc avec l'ancienne région supérieure est refusée (application sur cette région supérieure du critère I ou I' d'inégalité) ;
(2) la fusion du bloc courant avec l'ancienne région gauche est refusée et celle de ce bloc avec l'ancienne région supérieure est acceptée (le critère I ou I' est vérifié pour cette ancienne région supérieure et non pour l'ancienne région gauche) ;
(3) la fusion du bloc courant avec l'une ou l'autre des anciennes régions gauche et supérieure est refusée (le critère I ou éventuellement I' n'est vérifié sur aucune de ces régions) et il y a, avec ce bloc, initialisation d'une nouvelle région ;
(4) aucune de ces deux fusions n'est refusée (application du critère I ou éventuellement I' qui est vérifié), et, pour choisir entre l'une et l'autre, il faut introduire le critère II d'arbitrage.

Cette attribution finale du bloc courant est réalisée par les unités de calcul 11 et 12 qui reçoivent, issus des première, deuxième et troisième mémoires M1, R2, R3, les jeux de données d'erreurs liés respectivement au bloc courant, à l'ancienne région gauche et à l'ancienne région supérieure et détermine, à partir de l'ensemble de ces informations, toutes les données que l'on obtiendrait après fusion éventuelle du bloc avec l'une de ces deux anciennes régions, à savoir les cartes d'erreur des nouvelles régions obtenues dans l'un ou l'autre cas de fusion, ainsi que les erreurs minimales (BMA) et les vecteurs minima associés à ces nouvelles régions possibles.

Ces nouvelles données, associées à une nouvelle région gauche ou à une nouvelle région supérieure viennent alors se substituer, dans les deuxième et troisième mémoires de travail R2 et R3, aux jeux de données d'erreur qui concernaient les anciennes régions gauche et supérieure.

Ayant opéré cette première détermination, les unités de calcul 11 et 12 déterminent ensuite à quelle région le bloc courant est effectivement attribué (région gauche, région supérieure, nouvelle région initialisée) et les données relatives à cette région choisie sont recopiées dans la quatrième mémoire M4 de stockage de données de région. En même temps que ce stockage en mémoire M4, l'unité de contrôle 10 commande l'écriture, dans la cinquième mémoire M5, du numéro de repérage de la région qui vient d'être associée au bloc courant.

Ainsi, lorsque, bloc après bloc, l'image a été entièrement balayée, les vecteurs de mouvement optimaux sont retrouvés pour chaque bloc en consultant d'une part la cinquième mémoire M5, qui délivre le numéro de région correspondant à ce bloc, et d'autre part la quatrième mémoire M4, qui délivre le vecteur de mouvement MV estimé associé à la région affectée de ce numéro, puis délivrés par les unités de calcul 11 et 12.

Précédemment, on a mis l'accent sur un des **avantages** de l'invention qui consiste en une minimisation du nombre des mémoires ainsi que de capacités mémoires. Jusqu'à présent, la description n'a pas mis en lumière de manière détaillée comment cet avantage était obtenu et les problèmes cités sous $\alpha$), $\beta$) et $\gamma$) résolus. Cet exposé est fait ci-après :

En référence avec la FIG.3, il apparaît que pour un bloc donné BN, les régions voisines sont au nombre maximal de X, ce nombre X étant le nombre de blocs horizontaux, alors que Y est le nombre de blocs verticaux. Par exemple Y peut être égal à 72.

Dans ces circonstances, au lieu de devoir stocker X fois Y jeux de données d'erreur relatives aux régions, -carte d'erreur, erreur minimale (BMA) et vecteur minimum-, il est seulement nécessaire de stocker au plus X jeux. Si Y est égal à 72, cela représente donc 72 fois moins de jeux à stocker.

Il faut noter que l'information propre aux cartes d'erreurs n'est utile que dans la mesure où elle concerne une ou des régions potentiellement voisines du bloc à estimer.

C'est ainsi que la réduction par Y -par exemple 72- de la capacité de la mémoire M4 concerne les erreurs, par exemple 256, que peut constituer une carte d'erreur dans le cas où l'horizon de recherche a pour dimension [-8, +7] pixels dans les deux direction horizontale et verticale. Si l'horizon de recherche choisi est de dimensions plus importantes, par exemple [-32, +31], alors le nombre d'erreurs de la carte d'erreurs peut devenir très important, dans ce cas 4096. Ces chiffres montrent combien il est avantageux de disposer d'un système tel que celui de l'invention capable d'aboutir en traitant seulement X jeux de données d'erreur au lieu de X x Y.

On va maintenant revenir également sur l'architecture du système pour montrer comment sont en outre mieux résolus lesdits problèmes.

En référence avec la FIG.1, l'architecture du système comprend donc d'abord les trois mémoires M1, R2, R3. Dans M1, sont stockées les informations du bloc courant. Dans R2 sont stockées les informations de la nouvelle région constituée par l'ancienne région gauche du bloc courant et ce bloc courant, c'est-à-dire les informations de la nouvelle région constituée par une fusion dite "fusion gauche". Dans R3 sont stockées les informations de la nouvelle région constituée par une fusion dite "fusion supérieure".

L'existence des mémoires R2 ou R3 ne veut pas dire qu'une décision de fusion a été prise, ou bien n'a pas été prise. C'est pourquoi, les mémoires M1, R2, R2 sont appelées "mémoires de travail".

Par contre la mémoire M4 est celle où sont stockées les jeux de données d'erreur des régions après fusion, donc des régions potentiellement adjacentes aux blocs encore à estimer dans la trame courante.

En référence avec la FIG.1, on notera que la mémoire M4 est composée notamment d'une mémoire M'4 dans laquelle sont stockés tous les vecteurs de mouvements calculés pour chaque région de l'image courante. Cette mémoire M'4 permet de ne pas perdre l'information relative aux vecteurs de mouvements MV de toutes les régions de l'image. Les vecteurs de mouvement MV sont par ailleurs disponibles en sortie au point 4 de l'architecture de la FIG.1.

Outre les mémoires M1, R2, R3, M4, et M'4, l'architecture comprend la mémoire M5 dans laquelle est stocké le numéro de la région correspondant à un bloc donné de l'image.

Les modules de calcul 11 et 12 effectuent respectivement :

- en ce qui concerne le module de calcul 11 : les comparaisons et calculs pour une éventuelle fusion gauche du bloc courant,
- en ce qui concerne le module de calcul 12 : les comparaisons et calculs pour une éventuelle fusion supérieure du bloc courant.

Puis l'architecture comprend le module 10 qui est un contrôleur, qui gère l'ensemble du déroulement du procédé ou algorithme. Son rôle comprend :

- la décision de fusion,
- la gestion des numéros de région et de la mémoire M5,
- la gestion des mémoires M1 et M4, ainsi que la gestion de trois multiplexeurs MUX1, MUX2, MUX3. En référence avec la FIG.1, le premier multiplexeur MUX1 sélectionne une des trois régions gauches du bloc courant BN. Cette région gauche peut provenir, en référence avec les FIG.4A, B, C :
- soit de la mémoire M1 : cas de la région gauche potentielle A9 montré sur la FIG.4C. Donc MUX1 sélectionne M1.
- soit de la mémoire R3 : cas de la région potentielle gauche A7 montré sur la FIG.4B. Donc MUX1 sélectionne R3.
- soit de la mémoire R2 : cas de la région potentielle gauche A12 montré sur la FIG.4A. Donc MUX1 sélectionne R3.

Le second multiplexeur MUX2 sélectionne une des trois régions potentielles supérieures du bloc courant BN. Cette région supérieure peut provenir, en référence avec les FIG.4C, D, E :

- soit de la mémoire R3 : cas de la seule région supérieure potentielle A12. Donc dans le cas correspondant à la FIG.4D, MUX2 sélectionne R3 (ou R2).
- soit de la mémoire R3 : cas de la région supérieure potentielle A13. Donc dans le cas correspondant à la FIG.4F, MUX2 sélectionne R3.
- soit de la mémoire M4 : cas de région supérieure potentielle A6. Donc dans le cas correspondant à la FIG.4E, MUX2 sélectionne M4.

Par une considération géométrique, due au sens de balayage de blocs, on constate qu'une région gauche ne peut jamais provenir de la mémoire M4, ou plus exactement, une région n'ayant pas été impliquée dans le processus de fusion précédent, ne peut en aucun cas constituer une région gauche potentielle du bloc courant.

De même, un bloc précédent initialisant une région ne peut en aucun cas constituer une région supérieure au bloc courant.

Dans ces conditions, comme montré sur la FIG.1, il n'existe pas de contre-réaction de la mémoire M4 en direction du module de calcul 11, et pas non plus de contre-réaction de la mémoire M1 en direction du module de calcul 12.

Enfin le multiplexeur MUX3 sélectionne, en fonction de la décision de fusion, l'information stockée soit dans la mémoire M1 (cas de la non fusion avec initialisation d'une nouvelle région), soit dans la mémoire R2 (cas de la fusion gauche : avec mise à jour des informations concernant les régions modifiées), soit dans la mémoire R3 (cas de la fusion supérieure, avec mise à jour des informations concernant les régions modifiées).

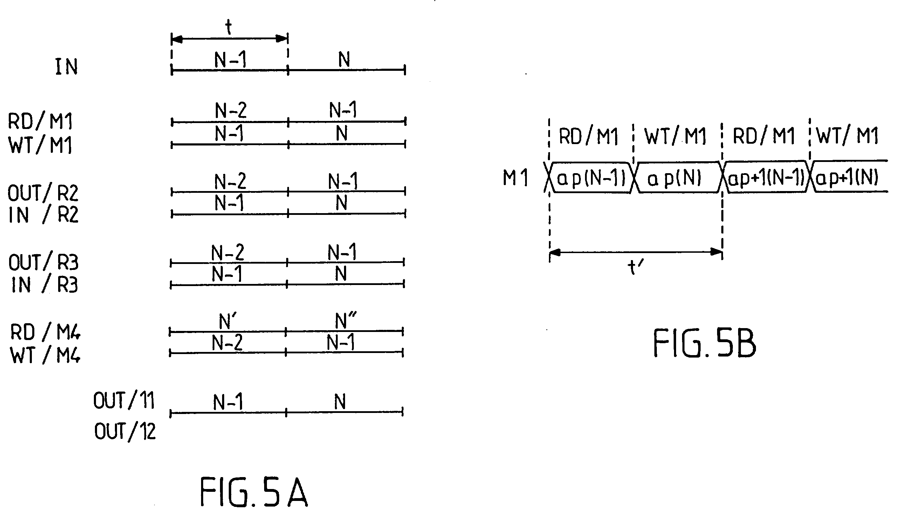

Du point de vue temporel, le processus est illustré par les FIG.5A et 5B. La référence IN représente les données fournies par le module BMA, et entrant dans le système de cohérence au point 2 de l'architecture de la FIG.1, référencé IN.

En référence avec la FIG.5A, pendant toute la durée t du traitement du bloc BN à estimer numéroté N sur l'image Ti, sont lues, dans les mémoires M1, R2, R3, les informations correspondant au bloc précédent numéroté N-1 dans cette image Ti (voir la FIG.3). Et en même temps, les nouvelles informations concernant le bloc numéroté N sont écrites.

Une phase de lecture est référencée RD sur cette FIG.5A, et une phase d'écriture est référencée WT. Ainsi par exemple une phase de lecture dans M1 est référencée RD/M1. Une phase d'écriture est référencée WT/M1. Il en est de même pour la mémoire M4, où la lecture et l'écriture sont référencées respectivement RD/M4, et WT/M4. Par contre, dans les mémoires de travail R2 et R3, les entrées de données sont référencées respectivement IN/R2 et IN/R3 alors que les sorties des données sont référencées respectivement OUT/R2 et OUT/R3. Enfin les sorties 21 et 22 modules 11 et 12 sont référencées OUT/11 et OUT/12.

Les modules de calcul 11 et 12 de l'architecture représentée sur la FIG.1, traitent quant à eux, les informations de ce bloc de rang N avant de les écrire dans les mémoires M1 et R2, ou R3.

La mémoire M4, durant cette période t, est lue pour fournir les jeux de données d'erreur concernant une région quelconque numérotée N'', qui constitue la région potentielle supérieure du bloc courant de numéro N. Et les informations concernant le bloc précédent numéroté N-1 sont écrites dans cette mémoire M4. Ceci est faisable puisque la décision de fusion concernant le bloc numéroté N-1 est déjà connue au moment où le bloc numéroté N est traité.

Dans le chronogramme de la FIG.5B, est illustré le remplacement de l'ancienne valeur correspondant à un vecteur noté Dp, ayant été stocké à l'adresse p référencée ap d'une mémoire, par la nouvelle valeur correspondant au même vecteur, mais concernant cette fois le bloc courant numéroté N. Ainsi dans le cours d'une période t' qui correspond à la période de base t pour un bloc divisée par le nombre de pixels dans le bloc, d'abord, on lit à l'adresse p pour le bloc N-1, ce qui est référencé ap(N-1), puis on écrit à l'adresse p pour le bloc N, ce qui est référencé ap(N). Puis on passe au vecteur noté Dp+1 à l'adresse ap+1 etc.

Donc, comme il a été décrit précédemment, l'architecture de cohérence selon l'invention comprend deux mémoires particulières qui sont :

- la mémoire de la région gauche R2,
- la mémoire de la région supérieure R3.

Le problème de l'utilisation des mémoires réside d'une manière générale dans le fait qu'il faut les adresser de la bonne manière. Il faut donc prévoir un dispositif d'adressage pour ces deux mémoires R2 et R3.

Un point particulièrement avantageux de l'invention est que ces mémoires sont constituées par des **retards** ; c'est-à-dire que les modules de mémoire R2 et R3 sont des modules de retard fixe; du fait que les retards sont choisis fixes, ces modules de mémoire R2 et R3 n'ont pas besoin d'être contrôlés.

Ainsi les modules de mémoire R2 et R3 ne stockent pas réellement les données relatives aux régions gauches et supérieures, mais sont destinés à retarder temporairement les jeux de données d'erreurs successifs relatifs aux régions gauches et supérieures.

Un autre point particulièrement avantageux de l'invention est que l'architecture comporte, pour choisir le bon chemin de données correspondant au transfert des jeux de données d'erreurs durant le calcul relatif à chaque bloc courant, les trois multiplexeurs déjà décrits MUX1, MUX2, MUX3, chacun ayant trois entrées et une sortie.

Cependant, il est important de noter que les mémoires M1 et M4 sont de véritables mémoires.

En effet, la différence entre la mémoire M1, qui doit être une mémoire réelle, et les retards R2 et R3 est due au fait que pour le bloc courant de rang N, il faut pouvoir lire l'erreur correspondant au vecteur minimum de la région après fusion, et donc l'erreur correspondant au vecteur minimum de ce bloc courant dans cette région (cela correspond au critère devant choisir entre une fusion supérieure ou une fusion gauche au cas où les premiers critères aient été positifs pour les deux types de fusion). Par exemple dans le cas d'une mémoire de 128 cases, on stockera dans chaque case une erreur notée E sur un vecteur minimal noté $V_i$, soit :

$$EV_1, EV_2... EV_i \text{ etc, i allant de 1 à 128.}$$

Le calcul de fusion donne un vecteur minimum noté $V_{MIN}$, qui vaut soit $V_1$, soit $V_2$... soit $V_i$. On a besoin de cette information $EV_{MIN}$, et le système doit pouvoir aller la chercher au bon endroit. Donc il faut connaître exactement l'emplacement de l'erreur associée à ce vecteur.

C'est la raison pour laquelle, on ne peut pas remplacer la mémoire M1 par un retard fixe.

En revenant au diagramme temporel de la FIG.5B, on constate que pendant le traitement du bloc numéroté N-1, le jeu de données d'erreur du bloc N-1 est stocké, en même temps que dans ladite mémoire M1, le jeu de données d'erreur du bloc précédent N-2 est lu.

On sait que, tel que montré sur la FIG.4, dans le découpage en régions, le bloc précédent N-1 constitue la région gauche du bloc courant N, et est donc nécessaire pour le calcul du bloc courant.

Dans le système selon l'invention, on a besoin de lire et d'écrire en même temps. Le vecteur $V_{N-1}$ relatif au bloc précédent N-1 est lu, et, pendant la même période t de bloc, l'erreur relative au vecteur courant $V_N$ est écrite.

Donc on pourrait supposer A PRIORI, qu'il faut pour effectuer ces opérations de lecture et écriture simultanées, deux fois plus de capacité mémoire pour M1.

Mais il faut considérer que, avant d'écrire la nouvelle valeur constituée par l'erreur pour le vecteur $V_N$ relative au bloc courant de rang N, on va lire l'ancienne valeur pour le vecteur $V_{N-1}$ relative au bloc précédent de rang N-1, conformément au chronogramme de la FIG.5B.

Donc, on lit à l'adresse p, puis on écrase l'ancienne valeur en écrivant la nouvelle. Il est donc nécessaire de prévoir deux fois moins de capacité mémoire qu'envisagé A PRIORI pour M1.

La mémoire M4 quant à elle, contient les jeux de données d'erreur de toutes les régions trouvées dans l'image. En fait les jeux stockés sont seulement ceux relatifs aux régions qui peuvent servir pour traiter les blocs qui restent à estimer dans l'image. On peut donc ainsi économiser aussi de la capacité mémoire pour la mémoire M4.

La présente invention peut aussi être appliquée au cas où le balayage des blocs au lieu d'être de gauche à droite, et de haut en bas, comme cela est le cas dans le procédé et le dispositif décrits plus haut, est simplement quelconque selon une séquence prédéterminée.

Dans ce cas, des modifications doivent être apportées au dispositif représenté sous forme de blocs fonctionnels sur la FIG.1.

Ces modifications résident d'abord dans les connexions des entrées des multiplexeurs MUX1, MUX2, et MUX3. Ces multiplexeurs ne doivent plus avoir seulement trois entrées

comme cela était le cas précédemment, mais quatre entrées qui sont prélevées à la sortie

- de la mémoire M1
- de la mémoire M2
- du retard R2
- du retard R3.

Dans le cas d'un balayage régulier, qu'il soit classique comme décrit plus haut ou d'autre manière régulière selon des lignes ou des colonnes, l'homme du métier peut trouver des simplifications qui n'existent plus si le balayage est quelconque.

Dans le cas du balayage quelconque, en plus des connexions supplémentaires des multiplexeurs, la mémoire M4 ne pourra pas être diminuée, puisqu'il faudra prévoir que toute région déjà formée dans l'image pourra servir de région dite "adjacente" pour le bloc courant. Cela revient à dire que cette mémoire M4 devra dans ce cas comprendre toutes les régions de l'image.

## Revendications

1. Procédé d'estimation de mouvement d'objets dans une séquence d'images animées comprenant des étapes de traitement d'une image courante dans la séquence, incluant :

une opération de subdivision de ladite image en blocs bidimensionnels arrangés en rangées et en colonnes et une estimation pour chaque bloc d'un jeu de données d'erreurs, et basés sur ledit jeu, une estimation d'un vecteur de mouvement unique attribué au bloc courant ; une opération de minimisation du nombre de vecteurs de mouvement dans l'image courante en créant et en faisant croître des régions formées par fusion de blocs adjacents ayant des vecteurs de mouvement cohérents, et en attribuant à chaque région créée ou formée par fusion un unique vecteur de mouvement qui est cohérent avec les vecteurs de mouvement des blocs fusionnés,

caractérisé en ce que ce procédé comprend des sous-étapes de :

balayage des blocs de l'image courante régulièrement rangée après rangée et dans chaque rangée considérée colonne après colonne, de manière à ce qu'un bloc courant ait au plus deux blocs adjacents précédemment balayés, appelés blocs potentiels, respectivement localisés dans la même colonne et dans la même rangée que ce bloc courant,

estimation, basée sur la comparaison des jeux d'erreurs respectifs des blocs potentiels et courant, d'un premier critère de cohérence des vecteurs de mouvement des blocs potentiels par rapport au bloc courant et un second critère d'arbitrage entre les vecteurs de mouvement des blocs potentiels, pour sélectionner, selon le premier et le second critère au plus un bloc ayant un vecteur de mouvement cohérent avec le vecteur de mouvement du bloc courant ;

création d'une région par fusion dudit bloc potentiel sélectionné et du bloc courant, et estimation pour ladite région d'un jeu de données d'erreurs et basé sur ledit jeu, d'un unique vecteur de mouvement pour ladite région,

croissance progressive de ladite région, appelée région potentielle, lorsqu'elle est adjacente à des blocs ultérieurs, par fusion de ladite région potentielle avec un bloc ultérieur à la fois, chaque fois que le vecteur de mouvement de ladite région potentielle est cohérent avec le vecteur de mouvement dudit bloc ultérieur selon le premier et le second critère.

2. Procédé selon la revendication 1, caractérisé en ce que la création et la croissance desdites régions comprend :

a) le stockage respectivement de jeux de données d'erreur relatifs au bloc courant, aux régions déjà formées, et de numéros affectés à ces blocs et régions respectivement ;
b) l'application de deux retards fixes aux jeux de données d'erreur des régions adjacentes au bloc courant déjà traitées, dites régions potentielles, candidates pour former une région nouvelle par rattachement avec le bloc courant ;
c) la comparaison des jeux de données d'erreur du bloc courant et de ceux desdites régions potentielles, et la décision, en fonction de critères prédéterminés, soit du rattachement du bloc courant à l'une desdites régions potentielles, soit de l'initialisation d'une région nouvelle à partir de ce bloc courant ;
d) le multiplexage entre d'une part les jeux de données d'erreur relatifs au bloc courant et aux régions déjà traitées qui sont stockées et retardées, et d'autre part les jeux de données d'erreur relatifs au bloc courant et aux régions potentielles qui sont à comparer et à stocker ;

e) le contrôle de la procédure de comparaison, de multiplexage, et de stockage des données ;

f) des contre-réactions entre d'une part les résultats de la comparaison et de la décision relatifs à la destination du bloc courant et d'autre part les données à retarder relatives aux régions nouvelles incluant le bloc courant qui forment des régions potentielles respectives, pour le bloc suivant le bloc courant, pour remplacer les données précédentes à retarder en vue du traitement dudit bloc suivant.

3. Procédé selon la revendication 2, caractérisé en ce que l'estimation du vecteur de mouvement de chaque bloc courant comprend la détermination de :

- une dite "carte d'erreur" qui rassemble les erreurs relatives aux différences de luminosité des pixels du bloc courant et celles des pixels des blocs situés dans l'horizon de recherche déplacés vis-à-vis de la projection dudit bloc courant dans l'image précédente selon un vecteur dit de mouvement,
- une dite erreur minimale, dite erreur BMA, qui est l'erreur minimale parmi toutes les erreurs de la carte d'erreur,
- un vecteur minimum qui est le vecteur de mouvement correspondant à l'erreur minimale (BMA),

et en ce qu'il comprend pour chaque région nouvelle formée par le rattachement du bloc courant à une dite région potentielle, la détermination de :

- la carte d'erreur de la région nouvelle qui est la somme arithmétique des cartes d'erreurs de chaque bloc contenu dans cette région,
- l'erreur minimale (dite BMA) de la région nouvelle, qui est la somme des erreurs minimales relatives à chaque bloc,
- le vecteur minimum de la région nouvelle qui est celui qui correspond à l'erreur minimale et qui est choisit comme vecteur de mouvement de la région nouvelle.

4. Procédé selon la revendication 3, caractérisé en ce que :

I) le premier critère comprend une comparaison de la somme des erreurs minimales relatives au bloc courant et respectivement à chacune des régions potentielles ou blocs potentiels avant fusion, avec respectivement l'erreur minimale relative à chacune des deux régions possibles formées par croissance qui seraient formées par fusion dudit bloc courant avec respectivement chacune desdites deux régions potentielles ou bloc potentiels,

ledit premier critère étant écrit sous la forme d'une inégalité qui est satisfaite si l'erreur minimale relative à la région possible formée par croissance est inférieure à ou égale à la somme augmentée d'un seuil réglable de l'erreur minimale relative au bloc courant et de l'erreur minimale relative à ladite région potentielle ou bloc potentiel, et

II) le second critère comprend une comparaison des erreurs minimales relatives à deux régions possibles formées par croissance qui seraient formées par fusion du bloc courant et respectivement de chacune des deux régions potentielles ou blocs potentiels,

ledit second critère étant écrit sous la forme d'une inégalité qui est satisfaite si l'erreur minimale relative à une des régions possibles formées par croissance est inférieure à l'erreur minimale relative à l'autre des deux régions possibles formées par croissance,

en ce que si ledit premier critère est satisfait pour deux blocs potentiels ou deux régions potentielles, le second critère est mis en oeuvre

et en ce que la décision de fusion est prise si à la fois le premier et le second critères sont satisfaits.

5. Dispositif d'estimation de mouvement d'objets dans une séquence d'images animées, pour mettre en oeuvre un procédé selon la revendication 1, ayant des modules pour traiter l'image courante dans la séquence, ces modules comprenant :

un premier module de calcul pour subdiviser ladite image courante en blocs bidimensionnels arrangés en rangées et en colonnes, et pour estimer, pour chaque bloc, un jeu de données d'erreurs, et basé sur ledit jeu, un unique vecteur de mouvement attribué au bloc correspondant,

un second module de calcul pour minimiser le nombre des vecteurs de mouvement générés par le premier module de calcul dans l'image courante en créant et en faisant croître des régions formées par fusion de blocs adjacents ayant des vecteurs de mouvement cohérents et en attribuant à chaque région créée ou formée par croissance un unique vecteur de mouvement qui est cohérent avec les vecteurs de mouvement des blocs fusionnés, ledit second module de calcul étant caractérisé en ce qu'il comprend :

des moyens pour balayer les blocs de l'image courante, régulièrement, rangée après rangée, et, dans chaque rangée considérée, colonne après colonne, de manière à ce qu'un bloc courant ait au plus deux blocs déjà balayés antérieurement appelés blocs potentiels respectivement localisés dans la même colonne et la même rangée que le bloc courant ;

des moyens pour estimer, basé sur des jeux de données d'erreurs respectifs, un premier critère de vecteurs de mouvement de blocs potentiels par rapport au bloc courant et un second critère d'arbitrage entre des vecteurs de mouvement des blocs potentiels, pour sélectionner, en fonction desdits premier et second critères, au plus un des dits blocs potentiels ayant un vecteur de mouvement cohérent avec le vecteur de mouvement dudit bloc courant ;

des moyens pour créer une région par fusion dudit bloc courant et dudit bloc potentiel sélectionné, et pour estimer, pour ladite région, un jeu de données d'erreurs, et basés sur ledit jeu, un unique vecteur de mouvement pour ladite région ;

et des moyens pour faire croître progressivement ladite région, appelée région potentielle, quand elle est adjacente à des blocs courants ultérieurs, par fusion de ladite région potentielle avec un des blocs ultérieurs à la fois, chaque fois que le vecteur de mouvement de ladite région potentielle est cohérent avec le vecteur de mouvement dudit bloc courant ultérieur selon ledit premier et second critères.

6.  Dispositif selon la revendication 5, caractérisé en ce que la structure de cohérence comprend :

a) des mémoires (M1, M4, M5) pour stocker respectivement les jeux de données d'erreur du bloc courant, des régions déjà formées, et les numéros affectés à ces blocs et régions respectivement ;

b) des modules de travail (R2 et R3) formés de deux retards fixes à appliquer aux jeux de données d'erreur des régions adjacentes au bloc courant déjà traitées, dites régions potentielles gauche et supérieure, candidates pour former une région nouvelle par rattachement avec le bloc courant ;

c) des modules de calcul (11, 12) pour comparer les jeux de données d'erreur du bloc courant et ceux desdites régions potentielles, et pour décider, en fonction de critères prédéterminés, soit le rattachement du bloc courant à l'une desdites régions potentielles, soit l'initialisation d'une région nouvelle à partir de ce bloc courant ;

d) des multiplexeurs (MUX1, MUX2, MUX3), à quatre entrées et une sortie, pour aller chercher les données d'erreur dans l'une des mémoires ou module de travail (M1, M4, R2, R3) et les diriger respectivement vers les modules de calcul (11,12) et vers la mémoire de stockage (M4) des données des régions respectivement ;

e) un module de contrôle de la procédure des modules de calcul, de celle des multiplexeurs et de l'adressage des mémoires ;

f) des contre-réactions entre les sorties des modules de calcul (11, 12) et les entrées des modules de travail (R2, R3) relatives aux jeux de données d'erreur des régions nouvelles incluant le bloc courant et qui forment des régions potentielles gauche et supérieure respectivement, pour le bloc suivant le bloc courant, pour remplacer les données précédentes dans les modules de travail (R2, R3) en vue du traitement dudit bloc suivant.

7.  Dispositif selon la revendication 6, caractérisé en ce que les calculs par le module (BMA) d'estimation de mouvement de chaque bloc comprennent la détermination de :

-   une dite "carte d'erreur" qui rassemble les erreurs relatives aux différences de luminosité des pixels du bloc courant et celles des pixels des blocs situés dans l'horizon de recherche déplacés vis-à-vis de la projection dudit bloc courant dans l'image précédente selon un vecteur dit de mouvement,
-   une dite erreur BMA qui est l'erreur minimale parmi toutes les erreurs de la carte d'erreur,
-   un dit vecteur minimum qui est le vecteur de mouvement correspondant à l'erreur minimale (BMA),

et en ce que pour chaque région nouvelle formée par le rattachement du bloc courant à une dite région potentielle, les modules de calcul (11, 12) effectuent la détermination de :

-   la carte d'erreur de la région nouvelle qui est la somme arithmétique des cartes d'erreurs de chaque bloc contenu dans cette région,
-   l'erreur minimale (dite BMA) de la région nouvelle, qui est la somme des erreurs minimales relatives à chaque bloc,
-   le vecteur minimum de la région nouvelle qui est celui qui correspond à l'erreur minimale et qui est choisit comme vecteur de mouvement de la région nouvelle.

8.  Dispositif selon la revendication 7, caractérisé en ce que les structures de calcul comparent les données d'erreurs du bloc courant et des régions potentielles ou blocs potentiels selon :

I/ un premier critère de cohérence qui exprime que l'erreur minimale relative à une région possible qui serait créée ou formée par fusion dudit bloc courant avec, respectivement, chacune de deux régions potentielles ou blocs potentiels, est inférieure ou égale à la somme augmentée d'un seuil réglable de l'erreur minimale relative au bloc courant et de l'erreur minimale relative à ladite région potentielle ou bloc potentiel,

et éventuellement, si le premier critère I/ est vérifié pour les deux régions potentielles ou blocs potentiels à la fois, selon :

II/ un second critère d'arbitrage qui exprime que l'erreur minimale relative à une des deux régions possibles crées ou formées par croissance, qui seraient formées par fusion avec le bloc courant, et, respectivement, chacune des deux régions potentielles ou blocs potentiels, est inférieure à l'erreur minimale relative à la seconde des deux régions possibles créées ou formées par croissance,

et caractérisé en ce que les structures de calcul prennent une décision positive de fusion du bloc courant avec une des régions potentielles ou blocs potentiels si le premier critère est vérifié pour au moins un bloc potentiel ou une région potentielle, et, si le premier critère est vérifié pour deux régions potentielles ou blocs potentiels à la fois, les modules de calcul prennent une décision positive de fusion avec seulement une desdites régions potentielles ou blocs potentiels sur la base du second critère d'arbitrage.

**Claims**

1. A method of estimating motion of objects in a sequence of animated images, comprising steps of processing a current image in the sequence, including the steps of:

    subdividing said image into two-dimensional blocks arranged in rows and columns and estimating a set of error data for each block and, based on said set, estimating a unique motion vector attributed to the current block;
    minimizing the number of motion vectors in the current image by creating and growing regions formed by merging of adjacent blocks having coherent motion vectors, and by attributing, to each created region or region formed by merging, a unique motion vector which is coherent with the motion vectors of the merged blocks, characterized in that this method comprises the sub-steps of:
    scanning the blocks of the current image regularly row by row and, in each considered row, column by column so that a current block has at most two previously scanned adjacent blocks, called potential blocks, respectively localized in the same column and in the same row as this current block,

estimating, on the basis of the comparison of the respective sets of errors of the potential and current blocks, a first criterion of coherence of the motion vectors of the potential blocks with respect to the current block, and a second criterion of arbitration between the motion vectors of the potential blocks for selecting, in accordance with the first and the second criterion, at most a block having a motion vector which is coherent with the motion vector of the current block;

creating a region by merging said selected potential block and the current block and estimating a set of error data for said region and, based on said set, a unique motion vector for said region,

progressively growing said region, called potential region, when it is adjacent to subsequent blocks, by merging said potential region with one subsequent block at a time, whenever the motion vector of said potential region is coherent with the motion vector of said subsequent block in accordance with the first and the second criterion.

2. A method as claimed in claim 1, characterized in that the creation and growth of said regions comprises the steps of:

    a) storing sets of error data relating to the current block, to the regions already formed, and storing numbers assigned to these respective blocks and regions;
    b) applying two fixed delays to the sets of error data of the regions which are adjacent to the current block and have already been treated, which regions are referred to as potential regions and are candidates for forming a new region by attachment to the current block;
    c) comparing sets of error data of the current block with those of said potential regions, and deciding, as a function of predetermined criteria, on either attaching the current block to one of said potential regions or on initializing a new region on the basis of this current block;
    d) multiplexing between the sets of error data relating to the current block and to the already treated regions which have been stored and delayed, and the sets of error data relating to the current block and to the potential regions which are to be compared and stored;
    e) controlling the procedure of comparing, multiplexing and storing the data;
    f) negative feedbacks between the comparison and decision results relating to the destination of the current block and the data to be delayed and relating to the new regions including the current block and forming respective potential regions for the block subsequent to the current block, so as to replace the preceding data to be delayed with a view to treatment of said subsequent block.

3. A method as claimed in claim 2, characterized in that the estimation of the motion vector of each current block comprises the determination of:

- an "error card" which resembles the errors relating to the differences in luminosity of the pixels of the current block and the luminosity of the pixels of the blocks situated in the search window and being displaced with respect to the projection of said current block in the preceding image in accordance with a motion vector,
- a minimal error, referred to as BMA error, which is the minimal error among all the errors of the error card,
- a minimum vector which is the motion vector corresponding to the minimal (BMA) error, and in that for each new region formed by attaching the current block to a potential region, it comprises the determination of:
- the error card of the new region which is the arithmetical sum of the error cards of each block contained in this region,
- the minimal error (referred to as BMA error) of the new region which is the sum of the minimal errors relating to each block,
- the minimum vector of the new region which is the vector corresponding to the minimal error and is chosen as a motion vector for the new region.

4. A method as claimed in claim 3, characterized in that:

I) the first criterion comprises a comparison of the sum of minimal errors, respectively relating to the current block and to each of the potential regions or potential blocks before merging, with the minimal error relating to each of the two possible regions formed by growth, which would be formed by merging said current block with each of said potential regions or potential blocks, respectively,

said first criterion being written in the form of an inequality which is satisfied when the minimal error relating to the possible region formed by growth is smaller than or equal to the sum increased with a controllable threshold of the minimal error relating to the current block and the minimal error relating to said potential region or potential block, and

II) the second criterion comprises a comparison of the minimal errors relating to the two possible regions formed by growth, which would be formed by merging the current block and each of the two potential regions or potential blocks, respectively,

said second criterion being written in the form of an inequality which is satisfied when the minimal error relating to one of the possible regions formed by growth is smaller than the minimal error relating to the other one of the two possible regions formed by growth, in that the second criterion is used when said first criterion is satisfied for two potential blocks or two potential regions and in that the merging decision is taken when the first and the second criterion are satisfied at the same time.

5. A device for estimating motion of objects in a sequence of animated images, for using a process as claimed in claim 1, having modules for processing the current image in the sequence, these modules comprising:

a first computation module for subdividing said current image into two-dimensional blocks arranged in rows and columns and for estimating a set of error data for each block and, based on said set, a unique motion vector attributed to the current block, a second computation module for minimizing the number of motion vectors, generated by the first computation module, in the current image by creating and growing regions formed by merging of adjacent blocks having coherent motion vectors, and by attributing, to each created region or region formed by growth, a unique motion vector which is coherent with the motion vectors of the merged blocks, said second computation module being characterized in that it comprises:

means for scanning the blocks of the current image regularly row by row and, in each considered row, column by column so that a current block has at most two previously scanned blocks, called potential blocks, respectively localized in the same column and in the same row as the current block;
means for estimating, on the basis of respective sets of error data, a first criterion of the motion vectors of the potential blocks with respect to the current block, and a second criterion of arbitration between the motion vectors of the potential blocks for selecting, as a function of said first and second criteria, at most one of said blocks having a motion vector which is coherent with the motion vector of said current block;

means for creating a region by merging said current block and said selected potential block and for estimating a set of error data for said region and, based on said set, a unique motion vector for said region; and means for progressively growing said region, called potential region, when it is adjacent to subsequent current blocks, by merging said potential region with one of the subsequent blocks at a time, whenever the motion vector of said potential region is coherent with the motion vector of said subsequent current block in accordance with the first and the second criterion.

6. A device as claimed in claim 5, characterized in that said coherence structure comprises:

a) memories (M1, M4, M5) for storing the sets of error data of the current block, of the regions already formed and the numbers assigned to these blocks and regions, respectively;
b) working modules (R2 and R3) constituted by two fixed delays to be applied to the sets of error data of the already treated regions which are adjacent to the current block and are referred to as potential left and upper regions which are candidates for forming a new region by attachment to the current block;
c) computation modules (11, 12) for comparing the sets of error data of the current block and those of the potential regions and for deciding, as a function of the predetermined criteria, on either attaching the current block to one of said potential regions or on initializing a new region on the basis of this current block;
d) multiplexers (MUX1, MUX2, MUX3) having four inputs and one output for searching the error data in one of the memories or working modules (M1, M4, R2, R3) and for directing them to the computation modules (11, 12) and to the memory (M4) for storing the data of the regions, respectively;
e) a module for controlling the procedure of the computation modules, those of the multiplexers, and the addressing of the memories;
f) negative feedbacks between the outputs of the computation modules (11, 12) and the inputs of the working modules (R2, R3) relating to the sets of error data of the new regions including the current block and forming respective potential left and upper regions for the block subsequent to the current block, so as to replace the preceding data in the working modules (R2, R3) with a view to treatment of said subsequent block.

7. A device as claimed in claim 6, characterized in that the computations of estimating motion of each block by the module (BMA) comprise the determination of:

- an "error card" which resembles the errors relating to the differences in luminosity of the pixels of the current block and the luminosity of the pixels of the blocks situated in the search window and being displaced with respect to the projection of said current block in the preceding image in accordance with a motion vector,
- a BMA error, which is the minimal error among all the errors of the error card,
- a minimum vector which is the motion vector corresponding to the minimal (BMA) error, and in that for each new region formed by attaching the current block to a potential region the computation modules (11, 12) determine:
- the error card of the new region which is the arithmetical sum of the error cards of each block contained in this region,
- the minimal error (referred to as BMA error) of the new region which is the sum of the minimal errors relating to each block,
- the minimum vector of the new region which is the vector corresponding to the minimal error and is chosen as a motion vector for the new region.

8. A device as claimed in claim 7, characterized in that the computation modules (11, 12) compare the error data of the current block and of the potential regions or potential blocks in accordance with:

I) a first criterion of coherence expressing that the minimal error relating to a possible region, which would be created or formed by merging said current block with each of the two potential regions or potential blocks, respectively, is smaller than or equal to the sum increased with a controllable threshold of the minimal error relating to the current block and the minimal error relating to said potential region or potential block,
and possibly, when the first criterion I/ is verified for the two potential regions or potential blocks at a time, in accordance with:
II) a second arbitration criterion expressing that the minimal error relating to one of the two possible regions created or formed by growth, which would be formed by merging with the current block and each of the two potential regions or potential blocks, respectively, is smaller than the minimal error relating to the second of the two possible regions created or formed by growth,

and is characterized in that the computation modules take a positive decision of merging the current block with one of the potential regions or potential blocks when the first criterion is verified for at least one potential block or one potential region, and, when the first criterion is verified for two potential regions or potential blocks at a time, the computation modules take a positive decision of merging with only one of said potential regions or potential blocks on the basis of the second arbitration criterion.

**Patentansprüche**

1. Verfahren zur Bestimmung von Objektbewegungen in einer animierten Bildsequenz mit laufenden Bildverarbeitungsschritten in der Sequenz, das beinhaltet:

Einen Unterteilungsvorgang des besagten Bildes in zweidimensionale, in Zeilen und Spalten angeordnete Blöcke, und für jeden Block eine Bestimmung eines Fehlerdatensatzes, und auf Grundlage des besagten Satzes eine Bestimmung eines einzigen, dem laufenden Block zugeteilten Bewegungsvektors;

ein Verfahren zur Minimierung der Anzahl Bewegungsvektoren im laufenden Bild, mit dem Erzeugen und Vergrößern der durch den Zusammenschluß angrenzender Blöcke mit kohärenten Bewegungsvektoren gebildeten Regionen und dem Zuteilen an jede durch einen Zusammenschluß erzeugte oder gebildete Region eines einzigen Bewegungsvektors, der mit den Bewegungsvektoren der zusammengeschlossenen Blöcke kohärent ist, dadurch gekennzeichnet, daß das Verfahren Unterschritte beinhaltet:

des Abtastens des laufenden Bilds, regelmäßig Reihe nach Reihe, und in jeder betrachteten Reihe Spalte nach Spalte, damit ein laufender Block höchstens zwei zuvor abgetastete angrenzende, sogenannte potentielle Blöcke hat, jeweils in derselben Spalte und derselben Reihe lokalisiert wie dieser laufende Block,

der auf dem Vergleich der jeweiligen Fehlersätze der potentiellen und laufenden Blöcke gründenden Bestimmung eines ersten Kriteriums der Kohärenz der Bewegungsvektoren der potentiellen Blöcke in bezug auf den laufenden Block und eines zweiten Kriteriums des Ermessens zwischen den Bewegungsvektoren der potentiellen Blöcke zur Auswahl nach dem ersten und dem zweiten Kriterium höchstens eines Blocks mit einem Bewegungsvektor, der zum Bewegungsvektor des laufenden Blocks kohärent ist;

der Schaffung einer Region durch Zusammenschluß des besagten potentiellen ausgewählten und des laufenden Blocks und Bestimmung für die besagte Region eines Fehlerdatensatzes und, auf dem besagten Satz gründend, eines für die besagte Region einzigen Bewegungsvektors,

des schrittweise Wachsens der besagten Region mit der Bezeichnung potentielle Region, wenn sie an vorhergehende Blöcke angrenzt, durch Zusammenschluß der besagten potentiellen Region mit einem vorhergehenden Block, zugleich jedesmal wenn der Bewegungsvektor der besagten potentiellen Region mit dem Bewegungsvektor des besagten vorhergehenden Blocks nach dem ersten und dem zweiten Kriterium kohärent ist.

2. Verfahren nach Anspruch 1, dadurch gekennzeichnet, daß die Schaffung und das Wachstum der besagten Regionen beinhaltet:

a) Das jeweilige Speichern der Fehlerdatensätze in bezug auf den laufenden Block, die bereits gebildeten Regionen und die diesen Blöcken und Regionen jeweils zugeteilten Nummern;

b) die Anwendung von zwei festen Verzögerungen auf die Fehlerdatensätze der an den laufenden Block angrenzenden, bereits verarbeiteten, sogenannten potentiellen Regionen, die über den Zusammenschluß mit dem laufenden Block Anwärter zum Bilden einer neuen Region sind;

c) den Vergleich der Fehlerdatensätze des laufenden Blocks mit denen der potentiellen Regionen und unter Berücksichtigung vorbestimmter Kriterien entweder die Entscheidung des Zusammenschlusses des laufenden Blocks mit einer der besagten potentiellen Regionen oder ausgehend von diesem laufenden Block die Initialisierung einer neuen Region;

d) das Multiplexen zwischen einerseits den Fehlerdatensätzen in bezug auf den laufenden Block und den bereits verarbeiteten Regionen, die gespeichert und verzögert sind, und andererseits den Fehlerdatensätzen in bezug auf den laufenden Block und die potentiellen Regionen, die zu vergleichen und zu speichern sind;

e) die Kontrolle des Vergleichs-, Multiplex- und Datenspeicherverfahrens;

f) die Gegenreaktionen zwischen einerseits den Ergebnissen des Vergleichs und der Entscheidung in bezug auf den laufenden Block und andererseits den zu verzögernden Daten in bezug auf die neuen, den laufenden Block beinhaltenden Regionen, die für den auf den laufenden Block folgenden Block jeweils potentielle Regionen bilden, um die vorhergehenden, zur Verarbeitung des besagten darauffolgenden Blocks zu verzögernden Daten auszutauschen.

3. Verfahren nach Anspruch 2, dadurch gekennzeichnet, daß die Bestimmung des Bewegungsvektors jedes laufenden Blocks die Bestimmung beinhaltet:

- Eine sogenannte "Fehlerkarte", die Fehler in bezug auf Helligkeitsunterschiede zwischen den Pixeln des laufenden Blocks und den Pixeln der im Suchhorizont befindlichen Blöcke zusammenstellt, gegenüber der Projektion dieses laufenden Blocks im vorhergehenden Bild gemäß einem sogenannten Bewegungsvektor versetzt,
- einen sogenannter minimalen Fehler mit der Bezeichnung BMA-Fehler, der unter allen Fehlern der Fehlerkarte der minimale Fehler ist,
- einen sogenannten minimalen Vektor, der zum minimalen (BMA-)Fehler der entsprechende Bewegungsvektor ist, und dadurch, daß es für jede durch den Zusammenschluß des laufenden Blocks mit einer besagten potentiellen Region neu gebildete Region die Bestimmung beinhaltet:
- der Fehlerkarte der neuen Region als arithmetische Summe der Fehlerkarten jedes in dieser Region enthaltenen Blocks,
- des minimalen (sogenannten BMA-) Fehlers der neuen Region als Summe der jedem Block eigenen minimalen Fehler,
- des minimale Vektors der neuen Region, der derjenige ist, der dem minimalen Fehler entspricht und als Bewegungsvektor der neuen Region gewählt wird.

4. Verfahren nach Anspruch 3, dadurch gekennzeichnet, daß:

I) Das erste Kriterium einen Vergleich der Summe der minimalen Fehler in bezug auf den laufenden Block und jeweils zu jeder der potentiellen Regionen oder potentiellen Blöcke vor dem Zusammenschluß beinhaltet, mit jeweils dem minimalen Fehler in bezug auf jede der beiden möglichen, durch Wachstum gebildeten Regionen, die durch den Zusammenschluß des besagten laufenden Blocks mit jeweils einer der besagten zwei potentiellen Regionen oder potentiellen Blöcke gebildet würden, wobei man das besagte erste Kriterium in der Form einer Ungleichung schreibt, die erfüllt wird, wenn der minimale Fehler in bezug auf die mögliche, über Wachstum gebildete Region kleiner oder gleich der um einen anpaßbaren Grenzwert erhöhten Summe des minimalen Fehlers in bezug auf den laufenden Block und des minimalen Fehlers in bezug auf die besagte potentielle Region oder den potentiellen Block ist, und

II) das zweite Kriterium einen Vergleich der minimalen Fehler in bezug auf zwei mögliche, durch Wachstum gebildete Regionen beinhaltet, die durch den Zusammenschluß des laufenden Blocks und jeweils jede der beiden potentiellen Regionen oder potentiellen Blöcke gebildet würden, wobei man das besagte zweite Kriterium in der Form einer Ungleichung schreibt, die erfüllt wird, wenn der minimale Fehler in bezug eine der möglichen, über Wachstum gebildeten Regionen kleiner als der minimale Fehler in bezug auf die anderen zwei möglichen, über Wachstum gebildeten Regionen ist, und dadurch, daß wenn das besagte erste Kriterium für zwei potentielle Blöcke oder zwei potentielle Regionen erfüllt ist, das zweite Kriterium umgesetzt wird und dadurch, daß die Entscheidung zum Zusammenschluß getroffen wird, wenn zugleich das erste und das zweite Kriterium erfüllt werden.

5. Vorrichtung zur Bestimmung von Objektbewegungen in einer animierten Bildsequenz, um ein Verfahren nach Anspruch 1 mit Modulen zum Verarbeiten des laufenden Bilds in einer Sequenz umzusetzen, wobei diese Module beinhalten:

Ein erstes Rechenmodul zum Unterteilen des besagten laufenden Bildes in zweidimensionale, in Zeilen und Spalten angeordnete Blöcke und zum Bestimmen für jeden Block eines Fehlerdatensatzes und, auf Grundlage des besagten Satzes, eines einzigen, dem entsprechenden Block zugeteilten Bewegungsvektors, ein zweites Rechenmodul zum Minimieren der Anzahl der vom ersten Rechenmodul erzeugten Bewegungsvektoren im laufenden Bild, mit dem Erzeugen und Vergrößern der durch den Zusammenschluß angrenzender Blöcke mit kohärenten Bewegungsvektoren gebildeten Regionen und dem Zuteilen an jede durch Wachstum erzeugten oder gebildeten Region eines einzigen Bewegungsvektors, der mit den Bewegungsvektoren der zusammengeschlossenen Blöcke kohärent ist, wobei das besagte Rechenmodul dadurch gekennzeichnet ist, daß es beinhaltet:
Mittel zum Abtasten des laufenden Bilds, regelmäßig Reihe nach Reihe, und in jeder betrachteten Reihe Spalte nach Spalte, damit ein laufender Block höchstens zwei zuvor abgetastete angrenzende, sogenannte potentielle Blöcke hat, jeweils in derselben Spalte und derselben Reihe lokalisiert wie dieser laufende Block;

Mittel zum Bestimmen des auf dem Vergleich der jeweiligen Fehlerdatensätze gründenden ersten Kriteriums der Bewegungsvektoren der potentiellen Blöcke in bezug auf den laufenden Block und eines zweiten Kriteriums des Ermessens zwischen den Bewegungsvektoren der potentiellen Blöcke zur Auswahl nach dem besagten ersten und dem zweiten Kriterium höchstens einer der besagten Blöcke mit einem Bewegungsvektor, der zum Bewegungsvektor des besagten laufenden Blocks kohärent ist;

Mittel zum Schaffen einer Region durch Zusammenschluß des besagten laufenden Blocks und des besagten potentiellen ausgewählten Blocks und Bestimmen für die besagte Region eines Fehlerdatensatzes und, auf dem besagten Satz gründend, eines für die besagte Region einzigen Bewegungsvektors;

und Mittel zum schrittweisen Vergrößern der besagten Region mit der Bezeichnung potentielle Region, wenn sie an laufende vorhergehende Blöcke angrenzt, durch Zusammenschluß der besagten potentiellen Region mit einem der vorhergehenden Blöcke, jedesmal wenn der Bewegungsvektor der besagten potentiellen Region mit dem Bewegungsvektor des besagten laufenden vorhergehenden Blocks nach dem besagten ersten und dem zweiten Kriterium kohärent ist.

6.  Vorrichtung nach Anspruch 5, dadurch gekennzeichnet, daß die Kohärenzstruktur beinhaltet:

a) Speicher (M1, M4, M5) zum jeweiligen Speichern der Fehlerdatensätze des laufenden Blocks, der bereits gebildeten Regionen und der diesen Blöcken und Regionen jeweils zugeteilten Nummern;

b) Arbeitsmoduln (R2 und R3), bestehend aus zwei festen Verzögerungen zur Anwendung auf die Fehlerdatensätze der an den laufenden Block angrenzenden, bereits verarbeiteten, sogenannten potentiellen linken und darüberliegenden Regionen, die über den Zusammenschluß mit dem laufenden Block Anwärter zum Bilden einer neuen Region sind;

c) Rechenmoduln (11, 12) zum Vergleichen der Fehlerdatensätze des laufenden Blocks mit denen der besagten potentiellen Regionen und unter Berücksichtigung vorbestimmter Kriterien entweder zum Entscheiden des Zusammenschlusses des laufenden Blocks mit einer der besagten potentiellen Regionen oder ausgehend von diesem laufenden Block der Initialisierung einer neuen Region;

d) Multiplexer (MUX 1; MUX2, MUX3) mit vier Eingängen und einem Ausgang, um die Fehlerdaten in einem der Arbeitsspeicher oder Arbeitsmoduln (M1, M4, R2, R3) zu holen und sie jeweils zu den Rechenmoduln (11,12) und dem Speicher (M4) der jeweiligen Regionendaten zu leiten;

e) Kontrollmodul für das Verfahren der Rechenmoduln, der Multiplexer und des Speicheradressierens;

f) Gegenreaktionen zwischen einerseits den Rechenmoduln (11,12) und den Arbeitsmoduln (R2, R2) in bezug auf die Fehlerdatensätze der neuen, den laufenden Block beinhaltenden Regionen, die für den auf den laufenden Block folgenden Block jeweils potentielle linke und darüberliegende Regionen bilden, um zur Verarbeitung des besagten darauffolgenden Blocks die vorhergehenden Daten in den Arbeitsmoduln (R2, R3) auszutauschen.

7.  Vorrichtung nach Anspruch 6, dadurch gekennzeichnet, daß die Berechnungen des Moduls (BMA) zur Bewegungsbestimmung jedes Blocks die Bestimmung beinhalten:

-   Einer sogenannten "Fehlerkarte", die Fehler in bezug auf Helligkeitsunterschiede zwischen den Pixeln des laufenden Blocks und den Pixeln der im Suchhorizont befindlichen Blöcke zusammenstellt, gegenüber der Projektion des besagten laufenden Blocks im vorhergehenden Bild gemäß einem sogenannten Bewegungsvektor versetzt,

-   eines sogenanntes BMA-Fehlers, der unter allen Fehlern der Fehlerkarte der minimale Fehler ist,

-   eines sogenannten minimalen Vektors, der dem zum minimalen Fehler (BMA) entsprechende Bewegungsvektor ist, und dadurch, daß für jede durch den Zusammenschluß des laufenden Blocks mit einer besagten potentiellen Region neu gebildete Region die Rechenmoduln (11,12) die Bestimmung vornehmen:

-   der Fehlerkarte der neuen Region als arithmetische Summe der Fehlerkarten jedes in dieser Region enthaltenen Blocks,

-   des minimalen (sogenannten BMA-) Fehlers der neuen Region als Summe der jedem Block eigenen minimalen Fehler,

-   des minimale Vektors der neuen Region, der derjenige ist, der dem minimalen Fehler entspricht und als Bewegungsvektor der neuen Region gewählt wird.

8.  Vorrichtung nach Anspruch 7, dadurch gekennzeichnet, daß die Rechenstrukturen die Fehlerdaten des laufenden Blocks und der potentiellen Regionen oder potentiellen Blöcke vergleichen nach:

I/ Einem ersten Kriterium der Kohärenz, das ausdrückt, daß der minimale Fehler in bezug auf eine mögliche Region, die durch Zusammenschluß des besagten Blocks mit jeweils jeder der beiden potentiellen Regionen oder potentiellen Blöcke geschaffen oder gebildet würde, kleiner oder gleich der um einen anpaßbaren Grenzwert erhöhten Summe des minimalen Fehlers in bezug auf den laufenden Block und des minimalen Fehlers in bezug auf die besagte potentielle Region oder den potentiellen Block ist,
und eventuell, wenn das erste Kriterium I/ zugleich für die beiden potentiellen Regionen oder Potentiellen Blöcke geprüft ist, nach:
II/ einem zweiten Kriterium des Ermessens, das ausdrückt, daß der minimale Fehler in bezug auf eine der zwei möglichen durch Wachstum gebildeten Regionen, die durch Zusammenschluß mit dem laufenden Block und jeweils jede der beiden potentiellen Regionen oder potentiellen Blöcke gebildet würden, kleiner als der minimale Fehler in bezug auf die zweite der beiden möglichen, über Wachstum geschaffenen oder gebildeten Regionen ist,
und dadurch gekennzeichnet, daß die Rechenstrukturen eine positive Entscheidung zum Zusammenschluß des laufenden Blocks mit einer der potentiellen Regionen oder potentiellen Blöcke trifft, wenn das erste Kriterium für mindestens einen potentiellen Block oder eine potentielle Region geprüft ist
und, wenn das erste Kriterium für zwei potentielle Regionen oder potentielle Blöcke zugleich geprüft ist, die Rechenmodule eine positive Entscheidung zum Zusammenschluß mit nur einer der besagten potentiellen Regionen oder potentiellen Blöcke auf Grundlage des zweiten Kriteriums des Ermessens treffen.

**20**

FIG.1

EP 0 619 552 B1

FIG. 2

FIG. 3

EP 0 619 552 B1

FIG.4A

Ti

BN

A12
(MUX1→R2,R3)

FIG.4B

Ti

A2

A7(MUX1→R3)  BN  A6

FIG.4C

Ti

A2

A9(MUX1→M1)  BN  A8

FIG.4D

BN  A12(MUX2→R2,R3)

Ti

FIG.4E

A7

A2

BN  A6(MUX2→M4)

Ti

FIG.4F

Ti

A13(MUX2→R3)

BN  A11

EP 0 619 552 B1

$t$

IN

| N–1 | N |

RD/M1  | N–2 | N–1 |
WT/M1  | N–1 | N |

OUT/R2  | N–2 | N–1 |
IN /R2  | N–1 | N |

OUT/R3  | N–2 | N–1 |
IN /R3  | N–1 | N |

RD /M4  | N' | N'' |
WT /M4  | N–2 | N–1 |

OUT/11  | N–1 | N |
OUT/12

FIG.5A

| RD/M1 | WT/M1 | RD/M1 | WT/M1 |

M1  ap(N–1)  ap(N)  ap+1(N–1)  ap+1(N)

$t'$

FIG.5B